# EUROPÄISCHE PATENTSCHRIFT

(11) **EP 1 234 709 B1**
(45) Veröffentlichungstag und Bekanntmachung des Hinweises auf die Patenterteilung: **06.07.2005**
(21) Anmeldenummer: 02001098.9
(22) Anmeldetag: 19.01.2002
(51) Int. Cl.: B60K 41/22, F16H 61/02, F16H 61/08

(54) **Automatische Betätigungsvorrichtung einer zwischen Motor und Getriebe eines Kraftfahrzeugs angeordneten Trennkupplung**
Automatic actuation apparatus of a clutch located between engine and transmission of a motor vehicle
Dispositif d'actionnement automatique d'un embrayage placé entre moteur et boîte de vitesses d'une automobile

(30) Priorität: 23.02.2001 DE 10108932
(43) Veröffentlichungstag der Anmeldung: 28.08.2002
(73) Patentinhaber: Bayerische Motoren Werke Aktiengesellschaft, 80809 München (DE)
(72) Erfinder: Eder, Jürgen, 84091 Walkertshofen (DE)

(56) Entgegenhaltungen:
- EP-A- 0 887 220
- EP-A- 1 074 423
- WO-A-99/45290
- DE-A- 19 802 736

## Beschreibung

Die Erfindung bezieht sich auf eine Vorrichtung zur automatischen Betätigung einer im Drehmomentübertragungsweg zwischen Motor und Getriebe eines Kraftfahrzeugs angeordneten Trennkupplung nach dem Oberbegriff der Patentansprüche 1 bzw. 2.

Es sind beispielsweise Automatikgetriebe mit Wandlerkupplungen bekannt, die mittels elektronischer Steuergeräte in Abhängigkeit von einem gangwahlbezogenen Schalthebel und ggf. von einem Programmwahlschalter gesteuert werden. Hierbei ist der gangwahlbezogene Schalthebel meist der Wählhebel für die Positionen P, R, N und D, die bei Automatikgetrieben üblich sind. Weiterhin sind Automatikgetriebe mit einem Programmwahlschalter bekannt, wodurch beispielsweise ein Winterprogramm oder ein Sportprogramm auswählbar ist.

Weiterhin sind Vorrichtungen zum automatischen Betätigen von Trennkupplungen bei Handschaltgetrieben bekannt, wie beispielsweise aus der DE 39 09 032 C2 hervorgeht.

Es ist Aufgabe der Erfindung, Vorrichtungen eingangs genannter Art fahrerindividueller bzw situationsangepasster auszugestalten.

Diese Aufgabe wird durch die Merkmale der Patentansprüche 1 und 2 gelöst. Vorteilhafte Weiterbildungen der Erfindung sind die Gegenstände der abhangigen Ansprüche.

Besonders vorteilhaft ist die Erfindung bei der Verwendung von gangwahlbezogenen Schalthebeln, durch die zum einen ein automatisierter Modus, ähnlich einem Automatikgetriebe, und zum anderen ein sequenzieller Modus, ahnlich einem Handschaltgetriebe, einstellbar ist.

Anspruch 1 bezieht sich auf den sequenziellen Modus, Anspruch 2 bezieht sich auf den automatisierten Modus.

Erfindungsgemäß wird ein Programmwahlschalter vorgesehen, durch den manuell zumindest quasi-kontinuierlich, d. h. in Stufen oder kontinuierlich, Programme unterschiedlicher Sportlichkeit auswählbar sind. Mittels eines gangwahlbezogenen Schalthebels ist entweder ein sequenzieller Modus oder ein automatisierter Modus anwählbar. Die Gänge sind über das Steuergerät entweder im sequenziellen Modus ebenfalls mittels des gangwahlbezogenen Schalthebels manuell oder im automatisierten Modus automatisch hoch- bzw. zurückschaltbar. Je höher das ausgewählte Programm im Hinblick auf die Sportlichkeit ist, desto schneller wird in beiden Modi bei einem Gangwechsel das Öffnen und Schließen der Trennkupplung sowie der Gangwechsel selbst mittels des elektronischen Steuergeräts vorgenommen.

Somit steht bei einem Programm mit niedrigerer Sportlichkeit eher der Komfort im Vordergrund, da langsamere Gangwechselvorgänge und ein langsameres Öffnen und Schließen der Trennkupplung flachere Gradienten im Kupplungsmomentenverlauf ermöglichen. Dagegen steht bei einem Programm mit hoher Sportlichkeit die Schnelligkeit im Vordergrund, wobei ein steiler Gradient des Kupplungsmomentenverlaufs beim Aus- und Einkuppeln nur zu einer sehr kurzen Zugkraftunterbrechung des Motors führt Ergänzend wird darauf hingewiesen, dass bei der erfindungsgemäßen Vorrichtung weder im manuellen sequenziellen Modus noch im automatisierten Modus ein Kupplungspedal vorhanden ist. Die Kupplung wird durch das elektronische Steuergerät automatisch angesteuert. Auch der Gangwechsel im Getriebe wird automatisch durchgeführt. Im automatisierten Modus wird auch die Gangwahl automatisch vorgenommen. Im manuellen sequenziellen Modus wird die Gangwahl vorzugsweise durch einen elektrischen Schalter am Schalthebel in Form eines Schaltbefehls (ein Gang hochschalten +, ein Gang zuruckschalten -) an das Steuergerät manuell vorgenommen. Das erfindungsgemaße System ermöglicht somit auch im manuellen sequenziellen Modus einerseits extrem kurze Schaltzeiten, andererseits wird ein mogliches Verschalten verhindert.

Bei der erfindungsgemäßen Vorrichtung wird vorzugsweise eine Reibkupplung verwendet. Anders als bei einem Automatikgetriebe arbeitet hier also kein energieverzehrender und fahrleistungsmindernder Drehmomentwandler. Durch den Entfall der Betätigung der Kupplung und damit auch des Kupplungspedals, sind schnelle Schaltzeiten möglich. Durch die Möglichkeit der Fahrprogramme für unterschiedliche Sportlichkeit ergeben sich gegenüber einem Handschaltgetriebe teils bessere und vor allem stets reproduzierbare Fahrleistungswerte.

In einer vorteilhaften Weiterbildung der Erfindung wird die Öffnungs- und Schließgeschwindigkeit der Trennkupplung sowie die Gangwechselgeschwindigkeit über dem gesamten Motordrehzahlbereich zusätzlich mit steigernder Motordrehzahl erhöht. Somit wird das Schalten an die Fahrdynamik des Motors angepasst.

Vorzugsweise ist der Programmwahlschalter ein Wipptaster, mit dem die Sportlichkeit quasi kontinuierlich in Stufen hoch- oder heruntergetippt werden kann.

Vorzugsweise wird das über den Programmwahlschalter einstellbare sportlichste Programm im sequenziellen Modus nur aktiviert, wenn das Bremsregelsystem ausgeschaltet ist. Somit können sportlich-puristische Schaltzeiten wie im Rennwagen erreicht werden.

In der Zeichnung ist ein Ausführungsbeispiel der Erfindung dargestellt. Es zeigt
- Fig. 1: mögliche Komponenten der erfindungsgemäßen Vorrichtung,
- Fig 2: den Verlauf der Schaltgeschwindigkeit für Programme mit zunehmender Sportlichkeit in Abhängigkeit von der Motordrehzahl,
- Fig. 3: zwei mögliche unterschiedliche Einstellungen über den Programmwahlschalter und
- Fig. 4: den Verlauf des Kupplungsmoments vom Beginn des Auskuppelns bis zum Ende des Einkuppelns für zwei verschiedene Programme.

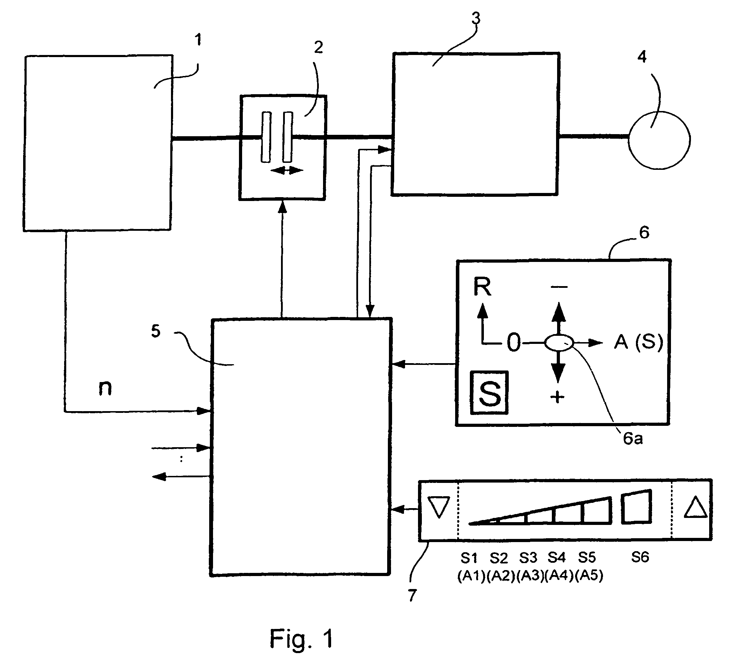

In Fig. 1 ist der Antriebsstrang eines Kraftfahrzeuges mit einem Motor in Form einer Brennkraftmaschine 1, mit einer steuerbaren Trennkupplung in Form einer Reibkupplung 2, mit einem Schaltgetriebe 3 und mit einem Achsantrieb 4 schematisch dargestellt. Die Trennkupplung 2 wird durch eine nicht näher dargestellte Betatigungseinrichtung aus- bzw. eingerückt (vgl horizontaler Doppelpfeil) Ein Steuergerät 5, z B in Form eines Getriebesteuergerates und/oder in Form eines Motorsteuergerates, steuert in Abhängigkeit von verschiedenen Eingangssignalen zumindest die Trennkupplung 2 und das Schaltgetriebe 3 an. Derartige Eingangssignale sind beispielsweise die Motordrehzahl n, die von einem Drehzahlsensor am Motor 1 erhalten wird Weitere Eingangssignale sind beispielsweise die Ausgangssignale des gangwahlbezogenen Schalthebels 6 und des Programmwahlschalters 7. In Fig 1 ist mit dem Bezugszeichen 6a die momentane Position des gangwahlbezogenen Schalthebels dargestellt. Es ist im dargestellten Ausführungsbeispiel der manuelle sequenzielle Modus S angewählt. Ein Umschalten in den automatisierten Modus A könnte durch ein Verschwenken des Schalthebels 6a nach rechts vorgenommen werden. Nach der Auswahl eines Modus wird der Schalthebel 6a automatisch in die dargestellte Position rückgestellt. Wird der Schalthebel 6a im sequenziellen Modus S nach oben (in Richtung -) verstellt, wird eine Rückschaltung ausgelöst, wird der Schalthebel 6a nach unten (in Richtung +) verschwenkt, wird eine Hochschaltung ausgelost. Die Position Null entspricht der Leerlaufstellung, die Position R entspricht dem Rückwärtsgang. Die jeweils angewählten Positionen des Schalthebels 6a werden an das Steuergerät 5 übermittelt.

Der Programmwahlschalter 7 ist ein Wipptaster, durch den zumindest fünf Programme S1 bis S5 (bzw. A1 bis A5 im Modus A) in Stufen nacheinander ein- bzw. ausgeschaltet werden können. Wird auf den rechten Rand des Programmwahlschalters 7 einmal gedrückt, erhöht sich die Programmzahl der Programme S1 bis S5 um eine Stufe. Wird auf den linken Rand des Programmwahlschalters 7 einmal gedrückt, erniedrigt sich die Programmzahl S1 bis S5 um eine Stufe Das Programm S1 entspricht dem Programm mit niedrigster Sportlichkeit und ist als ausgeglichen dynamisches Programm eher komfortbezogen. Das Programm S5 ist ein Fahrprogramm mit hoher Sportlichkeit und stellt ein schnelles Schalten in den Vordergrund. Das Programm mit der höchsten Sportlichkeit ist das Programm S6 im Modus S mit sportlich-puristischen Schaltzeiten, wie bei Rennwagen. Das Sportprogramm S6 kann vorzugsweise nur dann eingeschaltet werden, wenn das Bremsregelsystem, z. B. ein DSC (Dynamische Stabilitäts Control), über einen eigens dafür vorgesehenen Taster ausgeschaltet wurde.

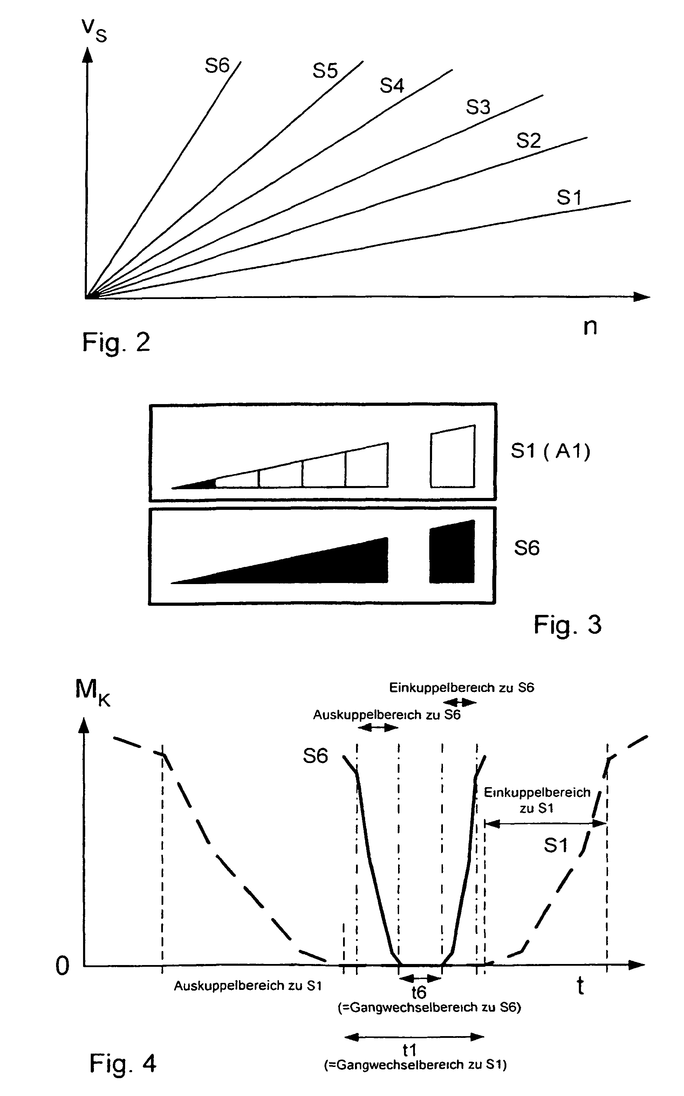

Je höher die Programmzahl S1 bis S6 ist, desto schneller steuert das Steuergerät 5 die Trennkupplung 2 zum Offnen und Schließen und das Schaltgetriebe 3 zum Wechseln des Ganges an. Je niedriger die Geschwindigkeit des Gangwechsels und die Offnungs- und Schließgeschwindigkeit der Trennkupplung 2 ist, desto höher ist der Komfort. Die Gangwechselgeschwindigkeit und die Offnungs- und Schließgeschwindigkeit der Trennkupplung 2 wird in Fig. 2 als Schaltgeschwindigkeit v_{S} zusammengefasst. Die Schaltgeschwindigkeit v_{S} steigt mit sportlicher werdendem Programm (S1 bis S6) sowie mit steigender Motordrehzahl n stetig an.

In Fig. 3 sind zwei mögliche Einstellungen durch den Programmwahlschalter 7 dargestellt. Fig. 3 oben zeigt das Programm S1 im sequenziellen Modus S. Dieselbe Einstellung würde im automatisierten Modus A das Programm A1 hervorrufen. In Fig. 3 unten ist das ausgewählte Programm S6 dargestellt. Für diese beiden Programme S1 und S6 sind in Fig. 4 die Verläufe des Kupplungsmoments beim Aus- und Einkuppeln dargestellt.

Fig. 4 zeigt das Kupplungsmoment M_{K} in Abhängigkeit von der Zeit t. Der Verlauf des Kupplungsmoments M_{K} zum Programm S1, das dem Programm mit niedrigster Sportlichkeit entspricht, ist in Fig. 4 gestrichelt dargestellt. Dieser Verlauf ist dem Verlauf des Kupplungsmoments M_{K} zum Programm S6 gegenübergestellt, das dem Programm mit höchster Sportlichkeit entspricht. Die Verläufe des Kupplungsmoments M_{K} setzen sich aus dem Auskuppelbereich (fallendes Kupplungsmoment M_{K}), dem Gangwechselbereich (Kupplungsmoment M_{K} = 0) und dem Einkuppelbereich (steigendes Kupplungsmoment M_{K}) zusammen Der Verlauf des Kupplungsmoments M_{K} für das Programm S1 im Auskuppelbereich und im Einkuppelbereich weist einen flacheren Gradienten auf als der Verlauf für das Programm S6 Somit sind also die Öffnungs- und Schließgeschwindigkeiten der Trennkupplung 2 im Programm S1 viel niedriger als im Programm S6.

Der Gangwechsel findet im Gangwechselbereich statt, in dem der Antriebsstrang getrennt und das Kupplungsmoment M_{K} Null ist. Die Zeit t6 für einen Gangwechsel im Programm S6 ist um ein Vielfaches kleiner als die Zeit t1 für einen Gangwechsel im Programm S1. Somit ist auch die Gangwechselgeschwindigkeit im Programm S6 um ein Vielfaches höher als im Programm S1 Die Verläufe der Kupplungsmomente M_{K} für die Programme S2 bis S5 liegen zwischen den Verlaufen für die Programme S1 und S6. Grundsatzlich ist unabhängig vom eingelegten Programm S1 bis S6 bzw. A1 bis A5 der Gradient der Kupplungsmomentverläufe im Auskuppel- und Einkuppelbereich mit zunehmender Motordrehzahl n steiler. Auch der Gangwechselbereich wird mit zunehmender Motordrehzahl n kleiner

Diese Vorrichtung zur automatischen Betätigung der Trennkupplung wird insbesondere durch Kennfelder und Programmeinheiten im Steuergerät 5 realisiert. Mit der erfindungsgemäßen Vorrichtung und dem damit verbundenen Verfahren wird ein hochdynamisches vollautomatisiertes (Modus A) bzw. teilweise automatisches (Modus S) Schaltgetriebe realisiert, das bei Bedarf sowohl hohen Komfortansprüchen als auch hohen Beschleunigungsansprüchen genügt.

## Patentansprüche

1. Vorrichtung zur automatischen Betätigung einer im Drehmomentubertragungsweg zwischen Motor und Getriebe eines Kraftfahrzeugs angeordneten Trennkupplung mit einem elektronischen Steuergerät, das elektrisch mit einem gangwahlbezogenen Schalthebel und mit einem Programmwahlschalter verbunden ist, **dadurch gekennzeichnet, dass** über den Programmwahlschalter (7) im Steuergerät (5) manuell zumindest quasi-kontinuierlich Programme (S1 ... S6; A1 .. A5) unterschiedlicher Sportlichkeit auswählbar sind, dass mittels des gangwahlbezogenen Schalthebels (6) die Gänge über das Steuergerät (5) im sequenziellen Modus (S) manuell hoch- bzw zurückschaltbar sind und dass im Steuergerät (5) Mittel vorgesehen sind, durch die bei einem Gangwechsel nach Betätigung (+, -) des Schalthebels (6) im sequenziellen Modus (S) die Öffnungs- und Schließgeschwindigkeit der Trennkupplung (2) sowie die Gangwechselgeschwindigkeit umso höher ist, je höher das ausgewahlte Programm im Hinblick auf die Sportlichkeit ist

2. Vorrichtung zur automatischen Betätigung einer im Drehmomentübertragungsweg zwischen Motor und Getriebe eines Kraftfahrzeugs angeordneten Trennkupplung mit einem elektronischen Steuergerät, das elektrisch mit einem gangwahlbezogenen Schalthebel und mit einem Programmwahlschalter verbunden ist, **dadurch gekenn** **zeichnet, dass** uber den Programmwahlschalter (7) im Steuergerat (5) manuell zumindest quasi-kontinuierlich Programme (S1 .. S6, A1 ... A5) unterschiedlicher Sportlichkeit auswählbar sind, dass mittels des gangwahlbezogenen Schalthebels (6) im Steuergerat (5) ein automatisierter Modus (A) zum automatischen Hoch- bzw. Zurückschalten der Gänge anwählbar ist und dass im Steuergerat (5) Mittel vorgesehen sind, durch die bei einem Gangwechsel im automatisierten Modus (A) die Offnungs- und die Schließgeschwindigkeit der Trennkupplung (2) sowie die Gangwechselgeschwindigkeit umso höher ist, je höher das ausgewahlte Programm im Hinblick auf die Sportlichkeit ist

3. Vorrichtung nach Patentanspruch 1 oder 2, **dadurch gekennzeichnet, dass** im Steuergerat (5) Mittel vorgesehen sind, durch die die Öffnungs- und Schließgeschwindigkeit der Trennkupplung sowie die Gangwechselgeschwindigkeit über dem gesamten Motordrehzahlbereich zusätzlich mit steigender Motordrehzahl (n) ansteigt.

4. Vorrichtung nach einem der Patentansprüche 1 bis 3, **dadurch gekennzeichnet, dass** der Programmwahlschalter (7) ein Wipptaster ist.

5. Vorrichtung nach einem der Patentansprüche 1 bis 4, **dadurch gekennzeichnet, dass** das über den Programmwahlschalter (7) einstellbare sportlichste Programm (S6) im sequenziellen Modus (S) nur aktiviert wird, wenn das Bremsregelsystem ausgeschaltet ist.

## Claims

1. A device for the automatic actuation of a clutch arranged in the torque transmission path between the engine and transmission of a motor vehicle comprising an electronic control apparatus which is electrically connected to a gear selection lever and a programme selection switch, **characterised in that** programmes (S1.. S6; A1...A5) with different sportiness can be manually selected at least virtually continuously via the programme selection switch (7) in the control apparatus (5), **in that** the gears can be manually shifted up or down in the sequential mode (S) via the control apparatus (5) by means of the gear selection lever (6) and **in that** means are provided in the control apparatus (5), by means of which when a gear is changed after actuation (+, -) of the gear lever (6) in the sequential mode (S) the opening and closing speed of the clutch (2) and the gear change speed are higher, the higher the selected programme with regard to the sportiness.

2. A device for automatic actuation of a clutch arranged in the torque transmission path between the engine and transmission of a motor vehicle comprising an electronic control apparatus which is electrically connected to a gear selection lever and a programme selection switch, **characterised in that** programmes (S1...S6; A1...A5) of different sportiness can be manually selected at least virtually continuously via the programme selection switch (7) in the control apparatus (5), **in that** an automatic mode (A) can be selected for automatically shifting the gears up or down by means of the gear selection lever (6) in the control apparatus (5) and **in that** means are provided in the control apparatus (5), by means of which, when a gear is changed in the automated mode (A), the opening and closing speed of the clutch (2) and the gear change speed are higher, the higher selected programme with regard to sportiness.

3. A device according to claim1 or 2, **characterised in that** means are provided in the control apparatus (5), by means of which the opening and closing speed of the clutch and the gear change speed additionally increase with increasing engine speed (n) over the entire engine speed range.

4. A device according to any one of claims 1 to 3, **characterised in that** the programme selection switch (7) is a rocker switch.

5. A device according to any one of claims 1 to 4, **characterised in that** the sportiest programme (S6) which can be adjusted by the programme selection switch (7) is only activated in the sequential mode (S) when the brake control system is switched off.

## Revendications

1. Dispositif d'actionnement automatique d'un embrayage disposé, dans la ligne de transmission de couple, entre le moteur et la boîte de vitesses d'un véhicule automobile et comprenant un appareil de commande électronique relié électriquement à un levier de commutation de sélection de vitesse et à un commutateur de programmes,
**caractérisé en ce que**
le commutateur de programmes (7) permet de sélectionner manuellement dans l'appareil de commande (5), des programmes au moins quasi-continus (S1 ... S6 ; A1 ... A5) de sportivité différente,
l'appareil de commande (5) permet d'augmenter ou de diminuer manuellement les vitesses dans le mode séquentiel (S) au moyen du levier de commutation (6) de sélection de vitesse,
et dans l'appareil de commande (5) des moyens permettent, lors d'un changement de vitesses après l'actionnement (+, -) du levier de vitesses (6) dans le mode séquentiel (S), d'avoir une rapidité d'ouverture et de fermeture de l'embrayage (2) ainsi qu'une rapidité de changement de vitesses d'autant plus élevées que le programme sélectionné est élevé en terme de sportivité.

2. Dispositif d'actionnement automatique d'un embrayage disposé, dans la ligne de transmission de couple, entre le moteur et la boîte de vitesses d'un véhicule automobile et comprenant un appareil de commande électronique relié électriquement à un levier de commutation de sélection de vitesse et à un commutateur de programmes,
**caractérisé en ce qu'**
le commutateur de programmes (7) permet de sélectionner manuellement dans l'appareil de commande (5), des programmes au moins quasi-continus (S1 ... S6 ; A1 ... A5) de sportivité différente,
il est possible de sélectionner dans l'appareil de commande (5), au moyen du levier de commutation (6) de sélection de vitesse, un mode automatique (A) pour augmenter ou diminuer automatiquement les vitesses,
et dans l'appareil de commande (5) des moyens permettent, lors d'un changement de vitesses dans le mode automatique (A), d'avoir une rapidité d'ouverture et de fermeture de l'embrayage (2) ainsi qu'une rapidité de changement de vitesses d'autant plus élevées que le programme sélectionné est élevé en terme de sportivité.

3. Dispositif selon la revendication 1 ou 2,
**caractérisé en ce que**
dans l'appareil de commande (5), des moyens permettent d'augmenter la rapidité d'ouverture et de fermeture de l'embrayage ainsi que la rapidité de changement de vitesses sur toute la plage du régime moteur lorsque le régime du moteur (n) est également croissant.

4. Dispositif selon l'une des revendications 1 à 3,
**caractérisé en ce que**
le commutateur de programmes (7) est un palpeur oscillant.

5. Dispositif selon l'une des revendications 1 à 4,
**caractérisé en ce que**
le programme sportif (S6) pouvant être réglé par le commutateur de programmes (7) n'est activé dans le mode séquentiel (S) que lorsque le système de régulation de freinage est coupé.
